(19) **Europäisches Patentamt / European Patent Office / Office européen des brevets**

(11) **EP 2 488 735 B1**

(12) **EUROPEAN PATENT SPECIFICATION**

(45) Date of publication and mention of the grant of the patent:
**07.05.2014 Bulletin 2014/19**

(51) Int Cl.:
**F01N 3/28** (2006.01)　　　**D04H 1/52** (2006.01)

(21) Application number: **10766475.7**

(22) Date of filing: **13.10.2010**

(86) International application number:
**PCT/US2010/052438**

(87) International publication number:
**WO 2011/047001 (21.04.2011 Gazette 2011/16)**

(54) **NON-WOVEN MAT AND POLLUTION CONTROL DEVICE WITH THE SAME**

NICHTGEWEBTE VLIESSMATTE UND UMWELTVERSCHMUTZUNG GERÄT MIT DER GLEICHEN

COUCHE NON TISSÉE ET DISPOSITIF ANTIPOLLUTION AVEC CELLE-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.10.2009 US 250937 P**

(43) Date of publication of application:
**22.08.2012 Bulletin 2012/34**

(73) Proprietor: **3M Innovative Properties Company**
**Saint Paul, MN 55133-3427 (US)**

(72) Inventors:
• **DE ROVERE, Anne N.**
**Saint Paul, Minnesota 55133-3427 (US)**
• **SACHS, Kim C., Jr.**
**Saint Paul, Minnesota 55133-3427 (US)**

(74) Representative: **Isarpatent**
**Patent- und Rechtsanwälte**
**Friedrichstrasse 31**
**80801 München (DE)**

(56) References cited:
**EP-A1- 0 328 293　　WO-A1-2009/048857**
**US-A1- 2006 257 298**

**Description**

<u>Background</u>

Pollution control devices such as catalytic converters for gasoline engines have been known for over 30 years. In the last few years, more stringent regulations for diesel vehicles have resulted in a rapid increase in the use of other pollution control devices including diesel oxidation catalysts (DOC's), diesel particulate filters (DPF's), and selective catalytic reduction devices (SCR's). The pollution control devices typically comprise a metal housing or casing with a pollution control element securely mounted within the casing by a resilient and flexible mounting mat. Catalytic converters, including diesel oxidation converters, contain a catalyst, which is typically coated on a monolithic structure. The monolithic structures are typically ceramic, although metal monoliths are also known. The catalyst in a gasoline engine oxidizes carbon monoxide and hydrocarbons and reduces the oxides of nitrogen to control atmospheric pollution. A diesel oxidation catalyst oxidizes the soluble organic fraction of soot particles as well as any carbon monoxide present.

Diesel particulate filters or traps are typically wall-flow filters, which have honeycombed, monolithic structures that are typically made from porous crystalline ceramic materials. Alternate cells of the honeycombed structure are typically plugged such that exhaust gas enters in one cell and is forced through the porous wall to an adjacent cell where it can exit the structure. In this way, the small soot particles that are present in diesel exhaust are collected. From time to time, the temperature of the exhaust gas is increased above the incineration temperature of the soot particles so that they are burned. This process is called "regeneration."

Selective catalytic reducers are similar in structure and in function (i.e., reduce NOx) to catalytic converters. A gaseous or liquid reductant (generally ammonia or urea) is added to the exhaust gas before reaching the selective catalytic reducer monolith. The mixed gases cause a reaction between the NOx emissions and the ammonia or urea. The reaction converts the NOx emissions into pure nitrogen and oxygen.

The monoliths, and in particular the ceramic pollution control monoliths, used in pollution control devices are fragile, and susceptible to vibration or shock damage and breakage. They have a coefficient of thermal expansion generally an order of magnitude less than the metal housing that contains them. This means that as the pollution control device is heated the gap between the inside periphery wall of the housing and the outer wall of the monolith increases. Even though the metallic housing undergoes a smaller temperature change due to the insulating effect of the mat, the higher coefficient of thermal expansion of the metallic housing causes the housing to expand to a larger peripheral size faster than the expansion of the ceramic monolith. Such thermal cycling occurs hundreds of times during the life and use of the pollution control device.

To avoid damage to the ceramic monoliths from road shock and vibration, to compensate for the thermal expansion difference, and to prevent exhaust gases from passing between the monolith and metal housing (thereby bypassing the catalyst), mounting mats are disposed between the ceramic monolith and metal housing. These mats exert sufficient pressure to hold the monolith in place over the desired temperature range but not so much pressure as to damage the ceramic monolith. Known pollution control mounting mats include intumescent and non-intumescent sheet materials comprised of inorganic (e.g., ceramic) fibers, and organic and/or inorganic binders. The process of placing or inserting the ceramic monolith and mounting material within the metal housing is referred to as canning and includes such processes as wrapping an intumescent sheet or ceramic mat around the monolith and inserting the wrapped monolith into the housing. An example of such a known ceramic fiber mounting mat is described in European patent application EP 0 328 293 A1.

In relatively low temperature applications (e.g., diesel particulate filters), typical organic component content (9% and higher) are usually detrimental to physical properties of the mat (e.g., due to stiffening or reduction in resiliency). Reductions in the total organic component content typically results in increased performance for the mounting mat at low temperature (typically not more than 350°C), but can be detrimental to the internal strength of the mat, leading to mat shearing during the canning process.

Summary

The present invention provides a non-woven layer as recited in claim 1, as well as a mat comprising a non-woven layer as recited in claim 12 or claim 13, and a pollution control device as recited in claim 14 or claim 15. Preferred features of the invention are recited in the dependent claims. The present disclosure describes a non- woven layer having generally opposed first and second major surfaces, a length with generally opposed first and second edges, and a width of at least 35 mm (in some embodiments, at least 40 mm, 45 mm, 50 mm, 60 mm, 70 mm, 80 mm" 90 mm, 100 mm, or even at least 150 mm; in some embodiments, in a range from 100 mm to 400 mm), wherein the non-woven layer comprises inorganic fibers (e.g., refractory ceramic fibers, polycrystalline ceramic fibers, and/or biosoluble fibers, etc.), has a binder content not greater than 7 (in some embodiments, not greater than 6, 5, 4, 3, 2, or not greater than 1; in some embodiments, zero) percent by weight, based on the total weight of the non-woven layer, and has stitching, wherein the stitching is at least one of:

(a) at least one (optionally two, three, four, or more) zig-zag line(s) of stitching, wherein the zig-zag stitching extends within at least 10 mm (in some embodiments, 9 mm, 8 mm, 7 mm, 6 mm, or even 5 mm; in a range of 5 mm to 10 mm) of each of the first and second edges of the non-woven layer; and
(b) at least two (optionally three, four, or more) lines of stitching (optionally three, four, or more), a first line of stitching in a range from 5 mm to 30 mm from (in some embodiments, in a range from 5 mm to 25 mm, 5 mm to 20 mm, 5 mm to 15 mm, or even 5 mm to 10 mm) from the first edge, and a second line of stitching in a range from 5 mm to 30 mm (in some embodiments, in a range from 5 mm to 25 mm, 5 mm to 20 mm, 5 mm to 15 mm, or even 5 mm to 10 mm) from the second edge.

Non-woven layers and mats described herein are useful, for example, in pollution control devices. An exemplary pollution control device comprises a pollution control element (e.g., catalytic converter, a diesel particulate filter, or a selective catalytic reduction element) mounted in a casing using a non-woven layer or mat described herein. In some preferred embodiments, the presence of the stitching, reduces or prevents shear of the first and second major surfaces of the non-woven layer when the non-woven layer is wrapped around the pollution control element and inserted into the tubular metal shell (casing) of a pollution control device.

In another aspect, the present disclosure describes a pollution control device comprising a pollution control element (e.g., catalytic converter, a diesel particulate filter, or a selective catalytic reduction element) mounted in a casing with mat comprising a non-woven layer, the non-woven layer having a first and second, generally opposed major surfaces, a length with first and second, generally opposed edges, and a width, wherein the non-woven layer comprising inorganic fibers (e.g., refractory ceramic fibers, polycrystalline ceramic fibers, and/or biosoluble fibers) and has a binder content not greater than 7 (in some embodiments, not greater than 6, 5, 4, 3, 2, or not greater than 1; in some embodiments, zero) percent by weight, based on the total weight of the non-woven layer, wherein there is at least one (optionally two, three, four, or more) line(s) of stitching along the length of the layer, wherein the presence of the stitching at least reduces shear (in some embodiments by at least 10, 15, 20, 25, 30, 35, 40, 45, or even at least 50 percent) of the first and second surfaces of the non-woven layer when the non-woven layer is wrapped around the pollution control element and inserted into the casing.

Other optional features of the mat and/or non-woven layer are as described herein for the mats and non-woven layers described in the preceding paragraphs.

Advantages of embodiments of non-woven layers described herein can include the ability to insert a low binder mounting mat into a tubular shell while minimizing the amount of shear between the first and second major surfaces of the non-woven layer. Significant amounts of shear could lead to erosion issues, clogging of the pollution control device, durability performance issues due to the reduction of the part surface area, etc.

Brief Description Of The Drawings

FIGS. 1-3 are top views of exemplary non-woven layers described herein.

FIG. 4 is a perspective, partially open view of an exemplary pollution control device described herein with an exemplary non-woven layer described herein.

FIG. 5 is a perspective view showing the installation of a pollution control element and exemplary mounting mat into the casing of a pollution control device.

FIG. 5A is a cross-sectional view of a pollution control element and exemplary mounting mat inside the casing of a pollution control device.

Detailed Description

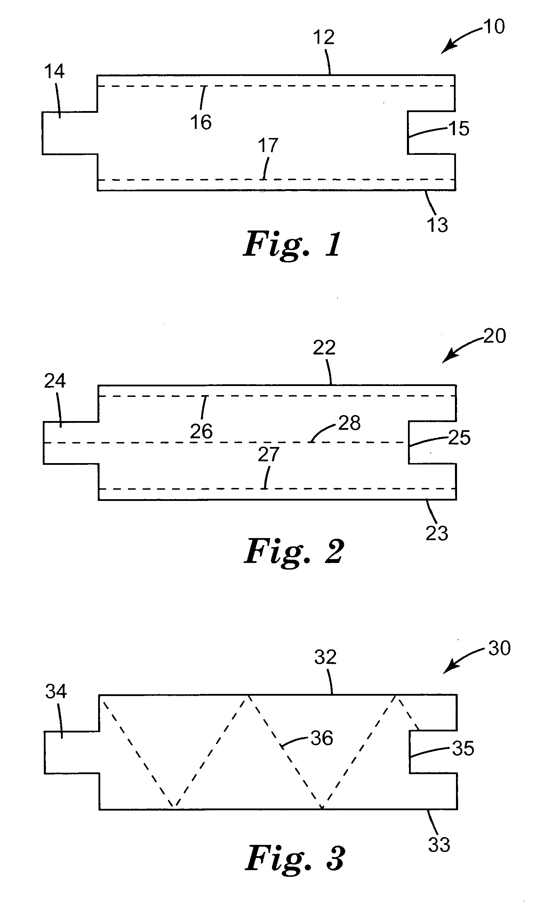

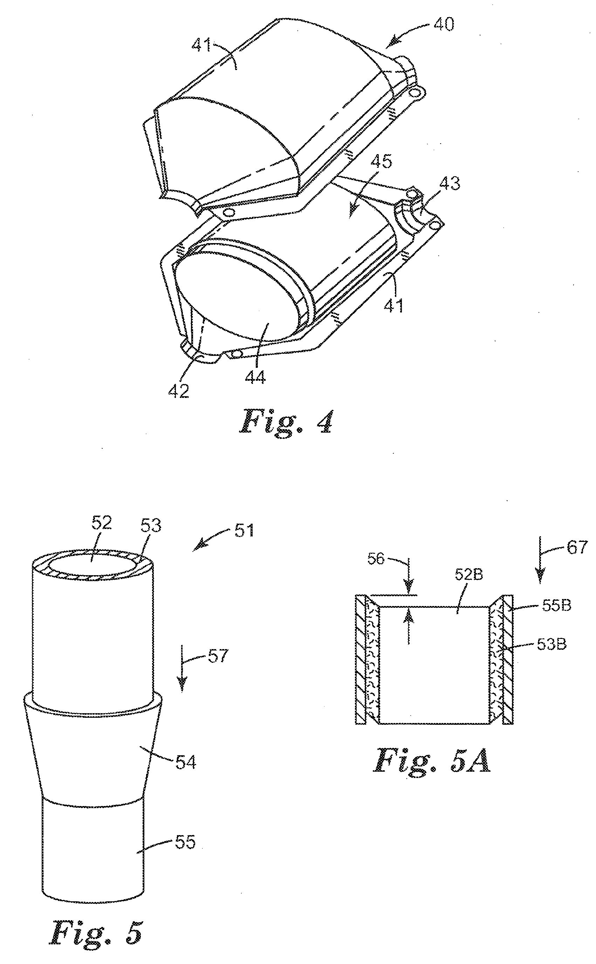

Referring to FIG. 1, exemplary layer 10 has edges 12 and 13, tongue 14, groove 15, and stitching 16 and 17.
Referring to FIG. 2, exemplary layer 20 has edges 22 and 23, tongue 24, groove 25, and stitching 26, 27, and 28.
Referring to FIG. 3, exemplary layer 30 has edges 32 and 33, tongue 34, groove 35, and stitching 36.
Referring to FIG. 4, pollution control device 40 comprises metallic casing 41 with generally frusto-conical inlet and outlet ends 42 and 43, respectively. Disposed within casing 41 is pollution control element 44 surrounded by exemplary non-woven layer according to the present disclosure 45. Non-woven layer 45 serves to tightly but resiliently support and hold monolithic element 44 within casing 41 and seals the gap between the pollution control element casing 44, preventing or reducing (preferably minimizing) exhaust gases from by-passing pollution control element 44.

"Fibers," as used herein, have a length of at least 5 micrometers, and an aspect ratio of at least 3:1 (i.e., length to diameter).

Exemplary useful inorganic fibers include a variety of oxides such as silicates, aluminates, alumino-silica compounds, zircon, biosoluble compositions (e.g., calcium magnesium silicate and magnesium silicate), glass compositions (e.g., S-glass and E-glass), amorphous, crystalline, and partially crystalline compositions, and mineral fibers (basalts), mineral wools, and combinations, as well as carbides (e.g., silicon carbide and silicon carbide), nitrides (e.g., silicon nitride and boron nitride), and combinations thereof.

In some embodiments, the inorganic fiber layer comprises glass (i.e., material derived from a melt and/or a vapor phase that lacks any long range crystal structure)) having a softening point, and comprising collectively not more than 95% percent by weight $SiO_2$ (if present) and $Al_2O_3$ (if present), based on the total weight of the inorganic fibers, wherein the glass has a softening point as determined by ASTM C338-93(2008), of at least 400°C).

Exemplary magnesium aluminum silicate glass fibers include E-glass fibers, S-glass fibers, S-2 glass fibers, R-glass fibers, and mixture thereof. E-glass, S-glass and S-2 glass are commercially available, for example, from Advanced Glassfiber Yarns, LLC, Aiken, SC. R-glass is commercially available, for example, from Owens Coming Vetrotex, Chambery, France.

In some embodiments, the inorganic fiber layer comprises refractory ceramic fibers (e.g., aluminosilicate fibers (including annealed and amorphous aluminosilicate fibers), alumina fibers, silica fibers, and basalt fibers). "Refractory," in the context of refractory ceramic fibers, refers to amorphous man-made inorganic materials produced from a melting, blowing or spinning of calcined kaolin clay or a combination of alumina and silica. Other oxides such as ziconia, titania, magnesia, iron oxide, calcium oxide, and alkalies may also be present. $SiO_2$ content of the refractory material is greater than 20% by percent by weight, and $Al_2O_3$ is greater than 20%, by weight, wherein $SiO_2$ and $Al_2O_3$ collectively comprise at least 95% of the inorganic material. Optionally, refractory ceramic fibers can be partially or completely crystallized by heat treatment. Exemplary amorphous, refractory aluminosilicate ceramic fibers include blown or spun amorphous refractory ceramic fibers (commercially available, for example, from Thermal Ceramics, Augusta, GA, under the trade designation "KAOWOOL" and "CERAFIBER," and from Unifrax Corporation, Niagara Falls, NY, under the trade designation "FIBERFRAX").

In some embodiments, the inorganic fiber layer comprises polycrystalline ceramic fibers (e.g., such as those available under the trade designations "SAFFIL" from Saffil Automotive, Chelsea, MI, and "MAFTEC" from Mitsubishi Chemicals USA, Inc., Chesapeake, VA).

In some embodiments, the inorganic fiber layer comprises biosoluble fibers (e.g., at least one of magnesium silicate fibers or calcium magnesium silicate fibers).

As used herein, "biosoluble inorganic fibers" refer to inorganic fibers that are decomposable in a physiological medium or a simulated physiological medium. Physiological medium refers to, but is not limited to, those bodily fluids typically found in the respiratory tract such as the lungs of animals or humans. Exemplary biosoluble inorganic fibers include those comprised of oxides of silicon, magnesium, and calcium (including calcium magnesium silicate fibers). These types of fibers are typically referred to as calcium magnesium silicate fibers and magnesium silicate fibers.

Biosoluble fibers are commercially available, for example, from Unifrax Corporation, Niagara Falls, NY, under the trade designations "ISOFRAX" and "INSULFRAX," under the trade designations "SUPERMAG 1200" from Nutec Fiberatec, Monterrey, Mexico, and Thermal Ceramics, Augusta, GA, under the trade designation "SUPERWOOL." "SUPERWOOL 607" biosoluble fibers, for example, contain 60 to 70 weight percent $SiO_2$, 25 to 35 weight percent CaO, 4 to 7 weight percent MgO, and a trace amount of $Al_2O_3$.

As used herein, the term "heat-treated silica fibers" refers to inorganic fibers comprising at least 95 percent by weight $SiO_2$, which have been exposed to a heat treatment temperature of at least 400°C for a heat treatment period of at least 5 minutes.

Exemplary heat-treated high silica content fibers are commercially available, for example, from Hitco Carbon Composites, Inc., Gardena, CA, under the trade designation "REFRASIL." For example, the "REFRASIL F100" fiber contains about 96 to about 99 percent by weight $SiO_2$.

Basalt fibers are made from the mineral basalt. Basalt is a hard, dense volcanic rock that can be found in most countries. The basalt is crushed, washed, melted, and fed into platinum-rhodium extrusion bushings to form continuous filaments. Because the fibers are derived from a mineral, the composition of the fibers can vary but generally has a composition, by weight, of about 45 to about 55 percent $SiO_2$, about 2 to about 6 percent alkalis, about 0.5 to about 2 percent $TiO_2$, about 5 to about 14 percent FeO, about 5 to about 12 percent MgO, at least about 14 percent by weight $Al_2O_3$, and often nearly about 10 percent CaO.

In some embodiments, non-woven layers described herein further contain an organic binder in amounts up to 7 (or more) weight percent based on the weight of the non-woven layer. The organic binder is typically burned off when the non-woven layer or multilayer mat containing the non-woven layer is used at elevated temperatures such as those typically encountered in a pollution control device.

Non-woven layers described herein can be made, for example, using wet (typically wet-laid) or dry (typically dry-laid) processes known in the art. Optionally, non-woven layers described herein can be heat-treated. Typically, the non-woven layer has a width in a range from 100 mm to 400 mm.

In some embodiments, the inorganic fibers are shot free, or contain a very low amount of shot (e.g., less than 1% by weight, based on total weight of the fibers), while in other embodiments, the shot content can be even greater than 50% by weight, based on the total weight of the fibers.

Suitable stitching thread will be apparent to one skilled in the art after reviewing the instant disclosure. Exemplary threads for the stitching include those comprising at least one of polyester or nylon thread, although other thread compositions may also be useful. Exemplary thread tex include, for example, 300, 200, 125, 100, or 50, although other thread tex may also be useful.

Inorganic threads or high temperature threads could also be used, as well as any thread with enough strength to stitch through the thickness on the parts, and enough strength to stitch inorganic fibers such as ceramic fibers and inorganic particles such as vermiculite. An organic thread is preferred since it will typically degrade when exposed to high temperatures while in use, and will typically not affect the holding performance of the mounting mat.

Optionally, non-woven layers described herein are needle-punched (i.e., where there is physical entanglement of fibers provided by multiple full or partial (in some embodiments, full) penetration of the mat, for example, by barbed needles). The nonwoven mat can be needle punched using a conventional needle punching apparatus.

Optionally, the non-woven layer, or another layer of a mat described herein, can be non-intumescent or intumescent (i.e., comprises intumescent material (e.g., comprise vermiculite)). In some embodiments, it is preferable that the mat is non-intumescent (i.e., free of intumescent material (e.g., free of vermiculite)). The intumescent material can be present in a non-woven layer and/or as one or more separate layers. As used herein, "non-intumescent" refers to a material that exhibits less than 10 percent free expansion in thickness under the same conditions. Some non-intumescent materials expand less than 8 percent, less than 6 percent, less than 4 percent, less than 2 percent, or less than 1 percent, when heated.

Intumescent layers include at least one type of intumescent material. Intumescent layer can further include inorganic fibers, organic binders, plasticizers, wetting agents, dispersants, defoaming agents, latex coagulants, fungicides, filler materials, inorganic binders, and organic fibers.

Exemplary intumescent materials include unexpanded vermiculite, hydrobiotite, water swellable synthetic tetrasilicic fluorine type mica as described in U.S. Pat. No. 3,001,571 (Hatch), alkali metal silicate granules as described in U.S. Pat. No. 4,521,333 (Graham et al.), expandable graphite, or combinations thereof. Alkaline metal silicate granules are commercially available, for example, from 3M Company, St. Paul, MN, under the trade designation "EXPANTROL 4BW." Expandable graphite is commercially available, for example, under the trade designation "GRAFOIL GRADE 338-50" from UCAR Carbon Co., Inc., Cleveland, OH. Unexpanded vermiculite is commercially available, for example, from Cometals Inc., New York, NY. In some applications, the intumescent materials are selected from unexpanded vermiculite, expandable graphite, or a combination thereof. The vermiculite can be treated, for example, with salts such as ammonium dihydrogen phosphate, ammonium nitrate, ammonium chloride, potassium chloride, or other soluble salts known in the art.

Intumescent layers often contain at least 5, at least 10, at least 20, at least 30, at least 40, at least 50, or at least 60 weight percent intumescent material, based on the weight of the intumescent layer. In some intumescent layers, the layer can be free of inorganic fibers. In other intumescent layers, the layer can be free of inorganic fibers and organic binders. In still other intumescent layers, the layer contains 5 to about 85 weight percent intumescent material, and less than 20 weight percent organic binder, based on the weight of the intumescent layer. Inorganic fibers are included in some intumescent layers.

Exemplary intumescent layers are commercially available, for example, from 3M Company, St. Paul, MN, under the trade designations "INTERAM 550," "INTERAM 700," and "INTERAM 800." These layers usually have a bulk density of about 0.4 $g/cm^3$ to about 0.7 $g/cm^3$ and a weight per unit area of about 1050 $g/m^2$ to about 8.140 $g/m^2$.

In some embodiments of mats described herein including an intumescent layer(s), the non-woven layer(s) contains glass fibers and the intumescent layer(s) contains vermiculite.

Optionally, edge protection materials can be added to mats described herein. Edge protection materials can be stainless steel wire wrapped around the edges as described, for example, in U.S. Pat. No. 5,008,086 (Merry). Other suitable edge protection materials include braided or rope-like glass, ceramic, or metal fibers as described, for example, in U.S. Pat. No. 4,156,533 (Close et al.). Edge protection materials can also be formed from compositions having glass particles as described, for example, in EP 639 701 A2 (Howorth et al.) (published February 22, 1995), EP 639 702 A2 (Howorth et al.) (published February 22, 1995), and EP 639 700 A2 (Stroom et al.) (published February 22, 1995). Other exemplary edge protection materials are described, for example, in PCT Pub. No. WO200815694 (published December 24, 2008).

The thickness of a particular layer can vary depending on the particular application. Typically, the non-woven layer has an average thickness in the range from 3 mm to 50 mm, although thicknesses outside of this range may also be useful. In some embodiments, the thickness of the intumescent layer (if present) is no greater than the thickness of each of the non-woven layer(s).

Typically, the non-woven layer has a basis weight in a range from 1000 $g/m^2$ to 7000 $g/m^2$, although basis weights outside of this range may also be useful.

Typically, the non-woven layer has an as-made bulk density in a range from 0.05 $g/cm^3$ to 0.3 $g/cm^3$, although as-made bulk density outside of this range may also be useful.

Non-woven layers and mats described herein, as-made, prior to heating above 500°C, contain not greater than 7 (in some embodiments, not greater than 6, 5, 4, 3, 2, 1, or even zero) percent by weight organic material, based on the total weight of the non-woven or mat, as applicable.

The non-woven layer can be used itself, for example, as a mounting mat for pollution control devices, or can further comprise other layers (e.g., one or more other non-woven layers, a layer(s) comprising inorganic fibers and/or an intumescent layer(s)). The metallic casing of the pollution control device can be made from materials known in the art for such use, including stainless steel.

Exemplary pollution control elements that can be mounted with mounting mat described herein include gasoline pollution control elements as well as diesel pollution control elements. The pollution control element may be a catalytic converter or a particulate filter, or trap. Catalytic converters contain a catalyst, which is typically coated on a monolithic structure mounted within a metallic housing. The catalyst is typically adapted to be operative and effective at the requisite temperature. For example, for use with a gasoline engine the catalytic converter should typically be effective at a temperature in a range from 400°C to 950°C, whereas for a diesel engine lower temperatures (typically not more than 350°C) are common. The monolithic structures are typically ceramic, although metal monoliths are also sometimes used. The catalyst oxidizes carbon monoxide and hydrocarbons and reduces the oxides of nitrogen in exhaust gases to control atmospheric pollution. While in a gasoline engine all three of these pollutants can be reacted simultaneously in a so-called "three way converter," most diesel engines are equipped with only a diesel oxidation catalytic converter. Catalytic converters for reducing the oxides of nitrogen generally consist of a separate catalytic converter. Examples of pollution control elements for use with a gasoline engine include those made of cordierite that are commercially available, for example, from Coming Inc., Coming, NY, or NGK Insulators, LTD., Nagoya, Japan, or metal monoliths commercially available, for example, from Emitec, Lohmar, Germany.

Suitable selective catalytic reduction elements are available, for example, from Corning, Inc., Coming, NY.

Diesel particulate filters or traps are typically wall flow filters, which have honeycombed, monolithic structures typically made from porous crystalline ceramic materials. Alternate cells of the honeycombed structure are typically plugged such that exhaust gas enters in one cell and is forced through the porous wall to an adjacent cell where it can exit the structure. In this way, the small soot particles that are present in diesel exhaust gas are collected. Suitable diesel particulate filters made of cordierite are commercially available, for example, from Coming Inc. and NGK Insulators, Inc. Diesel particulate filters made of silicon carbide are commercially available, for example, from Ibiden Co. Ltd., Japan, and are described in, for example, JP 2002047070A, published February 12, 2002.

Advantages and embodiments of this invention are further illustrated by the following examples, but the particular materials and amounts thereof recited in these examples, as well as other conditions and details, should not be construed to unduly limit this invention. All parts and percentages are by weight unless otherwise indicated.

Comparative Example A

A layer of intumescent material (4000 $g/m^2$; available under the trade designation "INTERAM MAT MOUNT 700" from 3M Company, St. Paul, MN) was laminated using an inorganic adhesive (coating weight of about 200 $g/m^2$) to a layer of non-intumescent material (2000 $g/m^2$; available under the trade designation "INTERAM MAT MOUNT 1220NC"). The intumescent material ("INTERAM MAT MOUNT 700") had a target of less than 5% by weight organic binder. The non-intumescent material ("INTERAM MAT MOUNT 1220NC") contained no organic binder.

Parts were cut using a die-cutter press, and the inlet and outlet edges of the part (longest edges) were treated with an edge protection material (available under the trade designation "3M EDGE PROTECTION PLUS" from 3M Company), for a final weight of 0.0118 gram of edge protection material per linear mm of the respective mat edges. The mat was 888 cm long and 148 cm wide without the edge protection material.

Example 1

Example 1 was prepared as described for Comparative Example A, except an organic thread (polyester, 125 tex for the top and bottom threads) was used to add a line of stitching along each edge of the part (after the edge protection material was applied), about 1.25 cm (0.5 inch) away from the respective edge as generally shown in FIG. 1. Tex is a unit of measure for the linear mass density of fibers and is defined as the mass in grams per 1000 meters.

Example 2

Example 2 was prepared as described for Example 1, except a third line of stitching was added down the middle of the part as generally shown in FIG. 2.

Example 3

Example 3 was prepared as described for Comparative Example A, except an organic thread (polyester, 125 tex for the top and bottom threads) was used to add a zigzag line of stitching between the edges of the part (after the edge protection material was applied), about 1.25 cm (0.5 inch) away from each respective edge as generally shown in FIG. 3. The angle of the zig-zag pattern was 100°.

Illustrative Example I

Illustrative Example I was prepared as described for Comparative Example A, except prior to the lamination process, an organic thread (polyester, 125 tex for the top and bottom threads) was used to add a line of stitches along each edge of the non-intumescent part. Therefore, the stitching was only applied through the non-intumescent layer, and not through the entire part.

Comparative Example B

Comparative Example B was prepared as described for Comparative Example A, except the weight of the intumescent material ("INTERAM MAT MOUNT 700") was 3600 g/m$^2$.

Example 4

Example 4 was prepared as described for Comparative Example B, except an organic thread (polyester, 125 tex for the top and bottom threads) was used to add a line of stitching along each edge of the part (after the edge protection material was applied), about 1.25 cm (0.5 inch) away from the respective edge.

Comparative Example C

Comparative Example C was prepared as described for Comparative Example A, except the weight of the intumescent material ("INTERAM MAT MOUNT 700") was 3600 g/m$^2$, and the weight of the non-intumescent material was 1700 g/m$^2$, and is available under the trade designation "INTERAM MAT MOUNT 1200NC" from 3M Company. The non-intumescent material ("INTERAM MAT MOUNT 1200NC") contained no organic binder.

Example 5

Example 5 was prepared as described for Comparative Example C, except an organic thread (polyester, 125 tex for the top and bottom threads) was used to add a line of stitching along each edge of the part (after the edge protection material was applied), about 1.25 cm (0.5 inch) away from the respective edge.
Comparative Examples A-C and Examples 1-6 were stuffed into a casing. All mats were die-cut to fit a 888 mm (10.5 inch) substrate, 8 mm gap design, with a width of 148 mm (4 inch), with tongue and groove design. The canning/stuffing process was conducted on a load cell (obtained from MTS, Eden Prairie, MN) of 100 kN. The stuffing speed was set between 150 and 500 mm/min. The die-cut mats were manually wrapped around a conventional diesel oxidation catalyst flow through cordierite substrate with a diameter of 267.1 mm and a length of 152.4 mm, placing the inlet edge of the mat at the same level as the substrate face. Referring to FIG. 5, assembly (mat wrapped around substrate) 5] was placed on the load cell frame, on top of empty stainless steel shell 55, with stuffing cone 54 sitting on shell 55. Stuffing cone 54 was centered on empty shell 55. A metal plate was placed on top of the assembly and the load cell was used to push assembly 51 in direction 57 through stuffing cone 54 into stainless steel shell 55.
After assembly 51 was pushed through stuffing cone 54 into stainless steel shell 55, mat shear was measured with a depth gage in four locations, 90 degrees apart, around the circumference of the can. Since the mat was originally placed at the same level as the face of the substrate, mat shear was estimated by the depth between the face of the substrate and the protruding mat (see FIG. 5A). Referring to FIG. 5A, mat 53B wrapped around substrate 52B in shell 55B with displacement 56. The results are provided in the Table, below.

EP 2 488 735 B1

| Example | Shear 1 | Shear 2 | Shear 3 | Shear 4 | Average shear | MD |
|---|---|---|---|---|---|---|
| | Mm | Mm | Mm | Mm | mm | g/cm$^3$ |
| Comp. A | 17 | 15 | 15 | 21 | 17 | 0.808 |
| 1 | 9 | 9 | 6 | 5 | 7.25 | 0.835 |
| 2 | 8.5 | 6 | 5 | 7.5 | 6.75 | 0.844 |
| 3 | 12 | 10 | 10 | 14 | 11.5 | 0.798 |
| Illus. I | 18 | 18 | 18 | 16 | 17.5 | 0.761 |
| Comp. B | 6 | 8 | 8.5 | 6.5 | 7.25 | 0.580 |
| 4 | 3 | 3 | 8 | 4 | 4.50 | 0.596 |
| Comp. C | 8.9 | 7.8 | 8.9 | 8 | 8.40 | 0.565 |
| 5 | 6 | 4.2 | 5.5 | 5.1 | 5.20 | 0.565 |

To investigate high mount densities, assembly 51 was placed into a stuffing cone placed on the MTS frame, and pushed through a 409 stainless steel shell with outer diameter of 285.75 mm and an inner diameter of 282.62 mm, for a final gap of 7.76 mm.

To investigate low mount densities, mat 53 was wrapped around a stainless steel can (instead of the cordierite substrate) having outer diameter of 262.51 mm, and pushed through a 409 stainless steel shell with outer diameter of 285.75 mm and an inner diameter of 282.62, for a final gap of 10.05 mm. The resulting mount density was calculated for each mat using the following formula:

$$MD = Mat\ basis\ weight\ /\ gap$$

Final mat mount density in the can is indicated in the Table, above.

Foreseeable modifications and alterations of this invention will be apparent to those skilled in the art without departing from this invention. This invention should not be restricted to the embodiments that are set forth in this application for illustrative purposes.

**Claims**

1. A non-woven layer (10, 20, 30, or 45) having generally opposed first and second major surfaces, a length with opposed inlet and outlet edges (12/13, 22/23, or 32/33), and a width of at least 35 mm, wherein the non-woven layer (10, 20, 30) comprises inorganic fibers, has a binder content not greater than 7 percent by weight, based on the total weight of the non-woven layer, and has stitching (16/17, 26/27, or 36), wherein the non-woven layer (10) is **characterized by** the stitching (16,17) being at least one of:

   (a) at least one zig-zag line of stitching (36), wherein the zig-zag stitching (36) extends within at least 10 mm of each of the inlet and outlet edges (32/33) of the non-woven layer; and
   (b) at least two lines of stitching (16/17 or 26/27), a first line of stitching (16 or 26) in a range from 5 mm to 30 mm from the inlet edge (12, 22), and a second line of stitching (17 or 27) in a range from 5 mm to 30 mm from the outlet edge (13, 23),

   wherein the presence of the stitching reduces shear of the first and second major surfaces of the non-woven layer (10, 20, 30, or 45) by at least 10 percent, when the non-woven layer (10, 20, 30, or 45) is wrapped around a pollution control element (44) and inserted into a casing (41) to make a pollution control device (40).

2. The non-woven layer (10, 20, 30, or 45) of claim 1, wherein the at least one zig-zag line of stitching (36) is present, and the stitching is within each of 10 mm of the inlet and outlet edges.

3. The non-woven layer of claim 1 or 2 wherein all stitching is linear (16/17 or 26/27) or non-linear (36).

8

4. The non-woven layer (10, 20, 30, or 45) of claim 1 or 2, wherein at least one line of stitching (36) is non-linear.

5. The non-woven layer (10, 20, 30, or 45) of claim 1, wherein at least the first and second lines of stitching (16/17 or 26/27) are present, the first line of stitching is in a range from 5 mm to 10 mm from the inlet edge, and the second line of stitching is in a range from 5 mm to 10 mm from the outlet edge.

6. The non-woven layer (10, 20, 30, or 45) of any of preceding claim having a binder content of zero percent by weight, based on the total weight of the non-woven layer.

7. The non-woven layer (10, 20, 30, or 45) of any preceding claim having a width in a range from 100 mm to 400 mm.

8. The non-woven layer (10, 20, 30, or 45) of any preceding claim having a basis weight in a range from 1000 $g/m^2$ to 7000 $g/m^2$.

9. The non-woven layer (10, 20, 30, or 45) of any preceding claim further comprising intumescent material.

10. The non-woven layer (10, 20, 30, or 45) of any preceding claim having an as-made bulk density in a range from 0.05 $g/cm^3$ to 0.3 $g/cm^3$.

11. The non-woven layer (10, 20, 30, or 45) of any preceding claim having an average thickness in the range from 3 mm to 50 mm.

12. A mat comprising the non-woven layer (10, 20, 30, or 45) of any preceding claim and another layer comprising inorganic fibers, with the mat having a binder content not greater than 7 percent by weight, based on the total weight of the mat.

13. A mat comprising the non-woven layer (10, 20, 30, or 45) of any preceding claim and an intumescent layer, with the mat having a binder content not greater than 7 percent by weight, based on the total weight of the mat.

14. A pollution control device (40) comprising a pollution control element (44) mounted in a casing (41) using a mat comprising the non-woven layer (10, 20, 30, or 45) of any one of claims 1 to 11.

15. A pollution control device (40) comprising a pollution control element (44) mounted in a casing (41) using the mat of claim 12 or 13.

**Patentansprüche**

1. Vliesschicht (10, 20, 30 oder 45), die eine erste und eine zweite Hauptfläche aufweist, die sich im Allgemeinen gegenüberliegen, eine Länge mit gegenüberliegenden Einlass- und Auslassrändern (12/13, 22/23 oder 32/33) und eine Breite von mindestens 35 mm, wobei die Vliesschicht (10, 20, 30) anorganische Fasern umfasst, einen Bindemittelgehalt von nicht mehr als 7 Gewichtsprozent, bezogen auf das Gesamtgewicht der Vliesschicht, aufweist und eine Naht (16/17, 26/27 oder 36) aufweist, wobei die Vliesschicht (10) **dadurch gekennzeichnet ist, dass** die Naht (16, 17) mindestens eine der Folgenden ist:

(a) mindestens eine Zick-Zack-Naht (36), wobei sich die Zick-Zack-Naht (36) innerhalb eines Abstandes von mindestens 10 mm zu jeweils dem Einlass- und dem Auslassrand (32, 33) der Vliesschicht erstreckt, und
(b) mindestens zwei Nähte (16/17 oder 26/27), wobei eine erste Naht (16 oder 26) im Bereich von 5 mm bis 30 mm Abstand zum Einlassrand (12, 22) und eine zweite Naht (17 oder 27) in einem Bereich von 5 mm bis 30 mm Abstand zum Auslassrand (13, 23) liegt,

wobei das Vorhandensein der Naht die Scherung der ersten und der zweiten Hauptfläche der Vliesschicht (10, 20, 30 oder 45) um mindestens 10 Prozent verringert, wenn die Vliesschicht (10, 20, 30 oder 45) um ein Schadstoffbekämpfungselement (44) geschlungen und in ein Gehäuse (41) eingesetzt ist, um eine Schadstoffbekämpfungsvorrichtung (40) zu schaffen.

2. Vliesschicht (10, 20, 30 oder 45) nach Anspruch 1, wobei die mindestens eine Zick-Zack-Naht (36) vorhanden ist und sich die Naht innerhalb eines Abstandes von jeweils 10 mm zum Einlass- und zum Auslassrand befindet.

**3.** Vliesschicht nach Anspruch 1 oder 2, wobei alle Nähte linear (16/17 oder 26/27) oder nicht linear (36) sind.

**4.** Vliesschicht (10, 20, 30 oder 45) nach Anspruch 1 oder 2, wobei mindestens eine Naht (36) nicht linear ist.

**5.** Vliesschicht (10, 20, 30 oder 45) nach Anspruch 1, wobei mindestens die erste und die zweite Naht (16/17 oder 26/27) vorhanden sind, wobei die erste Naht in einem Bereich von 5 mm bis 10 mm Abstand zum Einlassrand und die zweite Naht in einem Bereich von 5 mm bis 10 mm Abstand zum Auslassrand vorhanden ist.

**6.** Vliesschicht (10, 20, 30 oder 45) nach einem der vorhergehenden Ansprüche, einen Bindemittelgehalt von null Gewichtsprozent, bezogen auf das Gesamtgewicht der Vliesschicht, aufweisend.

**7.** Vliesschicht (10, 20, 30 oder 45) nach einem der vorhergehenden Ansprüche, eine Breite im Bereich von 100 mm bis 400 mm aufweisend.

**8.** Vliesschicht (10, 20, 30 oder 45) nach einem der vorhergehenden Ansprüche, ein Grundgewicht im Bereich von 1000 g/m$^2$ bis 7000 g/m$^2$ aufweisend.

**9.** Vliesschicht (10, 20, 30 oder 45) nach einem der vorhergehenden Ansprüche, ferner ein anschwellendes Material umfassend.

**10.** Vliesschicht (10, 20, 30 oder 45) nach einem der vorhergehenden Ansprüche, eine werkseitige Schüttdichte im Bereich von 0,05 g/cm$^3$ bis 0,3 g/cm$^3$ aufweisend.

**11.** Vliesschicht (10, 20, 30 oder 45) nach einem der vorhergehenden Ansprüche, eine durchschnittliche Dicke im Bereich von 3 mm bis 50 mm aufweisend.

**12.** Matte, die Vliesschicht (10, 20, 30 oder 45) nach einem der vorhergehenden Ansprüche und eine weitere Schicht aus anorganischen Fasern umfassend, wobei die Matte einen Bindemittelgehalt von nicht mehr als 7 Gewichtsprozent, bezogen auf das Gesamtgewicht der Matte, aufweist.

**13.** Matte, die Vliesschicht (10, 20, 30 oder 45) nach einem der vorhergehenden Ansprüche und eine anschwellende Schicht umfassend, wobei die Matte einen Bindemittelgehalt von nicht mehr als 7 Gewichtsprozent, bezogen auf das Gesamtgewicht der Matte, aufweist.

**14.** Schadstoffbekämpfungsvorrichtung (40), ein Schadstoffbekämpfungselement (44) umfassend, das unter Verwendung einer Matte, welche die Vliesschicht (10, 20, 30 oder 45) nach einem der Ansprüche 1 bis 11 umfasst, in ein Gehäuse (41) montiert ist.

**15.** Schadstoffbekämpfungsvorrichtung (40), ein Schadstoffbekämpfungselement (44) umfassend, das unter Verwendung der Matte nach Anspruch 12 oder 13 in ein Gehäuse (41) montiert ist.

**Revendications**

**1.** Couche non tissée (10, 20, 30 ou 45) présentant une première et une deuxième surfaces majeures essentiellement opposées, une longueur avec des bords d'entrée et de sortie opposés (12/13, 22/23 ou 32/33), et une largeur d'au moins 35 mm, dans laquelle la couche non tissée (10, 20, 30) comprend des fibres inorganiques, présente une teneur en liant non supérieure à 7 pour cent en poids, sur la base du poids total de la couche non tissée, et comporte une piqûre (16/17, 26/27 ou 36), dans laquelle la couche non tissée (10) est **caractérisée en ce que** la piqûre (16, 17) est au moins soit:

(a) au moins une ligne de piqûre en zigzag (36), dans laquelle la piqûre en zigzag (36) s'étend à l'intérieur d'au moins 10 mm de chacun des bords d'entrée et de sortie (32/33) de la couche non tissée; soit
(b) au moins deux lignes de piqûre (16/17 ou 26/27), une première ligne de piqûre (16 ou 26) dans une gamme de 5 mm à 30 mm du bord d'entrée (12, 22), et une deuxième ligne de piqûre (17 ou 27) dans une gamme de 5 mm à 30 mm du bord de sortie (13, 23),

dans laquelle la présence de la piqûre réduit le cisaillement des première et deuxième surfaces majeures de la couche non tissée (10, 20, 30 ou 45) d'au moins 10 pour cent, lorsque la couche non tissée (10, 20, 30 ou 45) est enroulée autour d'un élément de contrôle de la pollution (44) et est insérée dans un boîtier (41) afin de former un dispositif de contrôle de la pollution (40).

2. Couche non tissée (10, 20, 30 ou 45) selon la revendication 1, dans laquelle ladite au moins une ligne de piqûre en zigzag (36) est présente, et la piqûre est située à l'intérieur d'une distance de 10 mm de chacun des bords d'entrée et de sortie.

3. Couche non tissée selon la revendication 1 ou 2, dans laquelle la totalité des piqûres sont linéaires (16/17 ou 26/27) ou non linéaires (36).

4. Couche non tissée (10, 20, 30 ou 45) selon la revendication 1 ou 2, dans laquelle au moins une ligne de piqûre (36) est non linéaire.

5. Couche non tissée (10, 20, 30 ou 45) selon la revendication 1, dans laquelle les première et deuxième lignes de piqûre (16/17 ou 26/27) sont présentes, la première ligne de piqûre est située à une distance comprise entre 5 mm et 10 mm du bord d'entrée, et la deuxième ligne de piqûre est située à une distance comprise entre 5 mm et 10 mm du bord de sortie.

6. Couche non tissée (10, 20, 30 ou 45) selon l'une quelconque des revendications précédentes, présentant une teneur en liant de zéro pour cent en poids, sur la base du poids total de la couche non tissée.

7. Couche non tissée (10, 20, 30 ou 45) selon l'une quelconque des revendications précédentes, présentant une largeur comprise dans une gamme de 100 mm à 400 mm.

8. Couche non tissée (10, 20, 30 ou 45) selon l'une quelconque des revendications précédentes, présentant un poids de base compris dans une gamme de 1000 g/m$^2$ à 7000 g/m$^2$.

9. Couche non tissée (10, 20, 30 ou 45) selon l'une quelconque des revendications précédentes, comprenant en outre une matière intumescente.

10. Couche non tissée (10, 20, 30 ou 45) selon l'une quelconque des revendications précédentes, présentant une densité apparente comprise dans une gamme de 0,05 g/cm$^3$ à 0,3 g/cm$^3$.

11. Couche non tissée (10, 20, 30 ou 45) selon l'une quelconque des revendications précédentes, présentant une épaisseur moyenne comprise dans une gamme de 3 mm à 50 mm.

12. Tapis comprenant la couche non tissée (10, 20, 30 ou 45) selon l'une quelconque des revendications précédentes et une autre couche comprenant des fibres inorganiques, le tapis présentant une teneur en liant qui n'est pas supérieure à 7 pour cent en poids, sur la base du poids total du tapis.

13. Tapis comprenant la couche non tissée (10, 20, 30 ou 45) selon l'une quelconque des revendications précédentes, et une couche intumescente, et ledit tapis présente une teneur en liant qui n'est pas supérieure à 7 pour cent en poids, sur la base du poids total du tapis.

14. Dispositif de contrôle de la pollution (40), comprenant un élément de contrôle de la pollution (44) qui est monté dans un boîtier (41) en utilisant un tapis comprenant la couche non tissée (10, 20, 30 ou 45) selon l'une quelconque des revendications 1 à 11.

15. Dispositif de contrôle de la pollution (40), comprenant un élément de contrôle de la pollution (44) qui est monté dans un boîtier (41) en utilisant le tapis selon la revendication 12 ou 13.

*Fig. 1*

*Fig. 2*

*Fig. 3*

EP 2 488 735 B1

*Fig. 4*

*Fig. 5*

*Fig. 5A*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0328293 A1
- US 3001571 A, Hatch
- US 4521333 A, Graham
- US 5008086 A, Merry
- US 4156533 A, Close
- EP 639701 A2, Howorth
- EP 639702 A2, Howorth
- EP 639700 A2, Stroom
- WO 200815694 A
- JP 2002047070 A